# EUROPÄISCHE PATENTANMELDUNG

(11) **EP 3 537 017 A1**
(43) Veröffentlichungstag der Anmeldung: **11.09.2019**
(21) Anmeldenummer: 19157896.2
(22) Anmeldetag: 19.02.2019
(51) Int. Cl.: F16K 17/04, F16K 27/02

(54) **VENTIL**

(30) Priorität: 05.03.2018 DE 102018001749
(71) Anmelder: Hydac Fluidtechnik GmbH, 66280 Sulzbach/Saar (DE)
(72) Erfinder: Heß, Maximilian Felix, 66117 Saarbrücken (DE); Hettinger-Bartholome, Dennis, 66583 Spiesen-Elversberg (DE); Ries, Steven, 66125 Dudweiler (DE)
(74) Vertreter: Bartels und Partner, Patentanwälte

(57) **Zusammenfassung**

2. Ein Ventil mit einem mehrteiligen, insbesondere zweiteiligen Ventilgehäuse (2), das zum Ansteuern von Fluiddurchlässen (34, 36, 70) ein Ventilelement (8) aufweist, dessen Betätigungskraft und/oder -weg mittels einer Ansteuereinrichtung (24) vorgebbar ist, wobei ein Gehäuseteil (4) ein benachbartes Gehäuseteil (6) entlang einer vorgebbaren Verbindungsstrecke (14) übergreift, ist dadurch gekennzeichnet, dass entlang der Verbindungsstrecke (14) ein Gehäuseteil (4) unter Veränderung seines Querschnitts zumindest ein Festlegeteil (50) ausbildet, das in eine zuordenbare Ausnehmung (52) im benachbarten Gehäuseteil (6) eingreift.

## Beschreibung

Die Erfindung betrifft ein Ventil mit einem mehrteiligen, insbesondere zweiteiligen, Ventilgehäuse, das zum Ansteuern von Fluiddurchlässen ein Ventilelement aufweist, dessen Betätigungskraft und/oder -weg mittels einer Ansteuereinrichtung vorgebbar ist, wobei ein Gehäuseteil ein benachbartes Gehäuseteil entlang einer vorgebbaren Verbindungsstrecke übergreift.

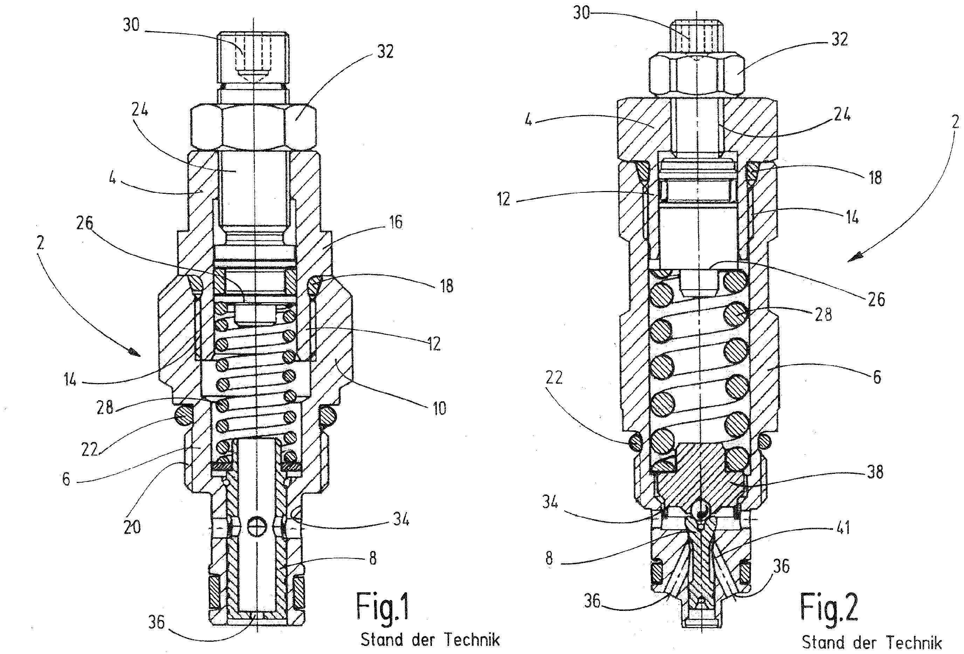

Ventile dieser Gattung sind Stand der Technik (siehe Fig. 1 und 2) und kommen für die Durchführung verschiedener Ventilfunktionen bei einer Vielzahl fluidtechnischer Anwendungen zum Einsatz. Bei solchen Ventilen mit entlang einer Verbindungsstrecke miteinander verbundenen Gehäuseteilen handelt es sich bevorzugt um Ventile in der sog. Cartridge-Bauweise, in Form von Stromregelventilen oder Druckbegrenzungsventilen, die als Ventilpatrone in einen zugeordneten Ventilblock einschraubbar sind. Beim Stand der Technik ist die Verbindungsstrecke als Gewindestrecke ausgeführt, mittels deren die Gehäuseteile durch Verschraubungen aneinander festlegbar sind. Schraubverbindungen zwischen Gehäuseteilen sind bei Ventilgehäusen kritisch. Um ein Versagen des Ventils zu vermeiden, sind zusätzliche Sicherungen gegen Lösen der Verschraubung erforderlich. Zudem besteht die Gefahr einer unbefugten Demontage oder Manipulation des Ventils durch Lösen der Verschraubung.

Im Hinblick auf diese Problematik stellt sich die Erfindung die Aufgabe, ein Ventil der eingangs genannten Gattung zur Verfügung zu stellen, das bei rationell und kostengünstig herstellbarer Bauweise sich durch eine erhöhte Gebrauchssicherheit auszeichnet.

Gemäß dem kennzeichnenden Teil des Patentanspruchs 1 zeichnet sich das erfindungsgemäße Ventil gegenüber dem Stand der Technik dadurch aus, dass entlang der Verbindungsstrecke ein Gehäuseteil unter Veränderung seines Querschnitts zumindest ein Festlegeteil ausbildet, das in eine zuordenbare Ausnehmung im benachbarten Gehäuseteil eingreift. Der erfindungsgemäß vorgesehene Ersatz der Gewindestrecke durch Ausbildung eines Formschlusses zwischen einem jeweiligen Festlegeteil und einer zugeordneten Ausnehmung, was ein Lösen der Verbindung durch Abschrauben ausschließt, vermeidet die beim Stand der Technik mit der Gefahr des ungewollten Lösens einhergehenden Nachteile und Gefährdungen. Sowohl die jeweiligen, durch Querschnittsänderung an einem Gehäuseteil ausgebildeten Festlegeteile als auch die Ausnehmung am anderen Gehäuseteil lassen sich einfach und rationell herstellen, so dass das erfindungsgemäße Ventil auch kostengünstig herstellbar ist.

Mit Vorteil ist die Anordnung derart getroffen, dass das eine Gehäuseteil, das das benachbarte Gehäuseteil übergreift, an seinem freien Ende oder Endbereich durch Umformen unter Verringerung seines Querschnitts nach innen vorstehend das jeweilige Festlegeteil ausbildet, das in die zuordenbare Ausnehmung im benachbarten Gehäuseteil derart eingreift, dass vorzugsweise eine form- und kraftschlüssige Verbindung zwischen den Gehäuseteilen an dieser Stelle erreicht ist. Die Umformung für die Ausbildung jeweiliger, nach innen vorstehender Festlegeteile durch plastische Materialverformung kann auf einfache Weise durch Verstemmen am Randbereich des übergreifenden Gehäuseteils durchgeführt werden. Bei Anwendung bekannter Presseinrichtungen braucht das Verstemmen nicht über den gesamten Umfangsbereich gleichmäßig durchgeführt zu werden, sondern durch Ausbilden mehrerer um den Umfang verteilter Stemmzonen, bei denen jeweils ein Materialabschnitt als Festlegeteil in eine als Ausnehmung im benachbarten Gehäuseteil befindliche Ringnut hinein verformt wird.

Bei vorteilhaften Ausführungsbeispielen weist eines der benachbarten Gehäuseteile ein Kopplungsteil auf, das mit einem komplementär ausgebildeten weiteren Kopplungsteil des anderen Gehäuseteils derart zusammenwirkt, dass eine formschlüssige Verbindung zwischen diesen Gehäuseteilen in deren festgelegtem Zustand aneinander erreicht ist. Dieser zusätzliche, zwischen den Gehäuseteilen ausgebildete Formschluss ermöglicht die Übertragung des Drehmoments beim Einschrauben des als Einschraubpatrone ausgebildeten Ventilgehäuses in den zugehörigen Ventilblock.

Mit Vorteil ist die Anordnung so getroffen, dass entlang der Verbindungsstrecke zwischen der formschlüssigen sowie der form- und kraftschlüssigen Verbindung zwischen den beiden Gehäuseteilen eine Dichteinrichtung, vorzugsweise in Form mindestens eines O-Dichtringes, angeordnet ist.

Bei besonders vorteilhaften Ausführungsbeispielen nimmt das eine Gehäuseteil zumindest teilweise die Ansteuereinrichtung auf und das andere Gehäuseteil das in ihm verfahrbar angeordnete Ventilelement, vorzugsweise einen Ventilkolben oder ein Schließelement (Sitzventil). Diese Anordnung ermöglicht eine Baukastenlösung, die beliebige, gewünschte Kombinationen zwischen Verstellbaugruppen und Ventilfunktionen ermöglicht. So kann beispielsweise eine standardisierte Verstellbaugruppe für unterschiedliche Ventiltypen benutzt werden, wie Stromregelventile, Druckbegrenzungsventile oder dergleichen, oder es lassen sich unterschiedlich ausgebildete Verstellbaugruppen an standardisierten Gehäuseteilen mit Ventilfunktionen anbringen, wobei es sich wiederum um unterschiedliche Ventilfunktionen handeln kann.

Bei vorteilhaften Ausführungsbeispielen weist das andere Gehäuseteil mit dem Ventilelement als Kopplungsteil an seiner freien Stirnseite einen Mehrkant auf, der in eine komplementär ausgebildete Ausnehmung des einen Gehäuseteils als dem weiteren Kopplungsteil eingreift, wobei das eine Gehäuseteil einen Absatz aufweist, an dem sich die freie Stirnseite des anderen Gehäuseteils in axialer Richtung abstützt. Die Kopplungsteile bilden dadurch nicht nur einen Formschluss zur Übertragung des Einschraubdrehmoments, sondern die Anlage des das Ventilelement enthaltenden Gehäuseteils am Absatz des die Einstelleinrichtung enthaltenden Gehäuseteils bildet zusammen mit dessen jeweiligen Festlegeteilen auch einen Formschluss zur axialen Sicherung der Gehäuseteile.

Bei Ausbildung als sog. Cartridge-Ventil weist das Ventilgehäuse außenumfangsseitig eine Einschraubstrecke auf, zum Einschrauben in Drittbauteile, wie Ventilblöcke, wobei eine Angriffsmöglichkeit für ein Werkzeug, wie einen Schraubenschlüssel, an dem einen Gehäuseteil außenumfangsseitig angeordnet ist. Mit Vorteil kann hierfür am Gehäuseteil ein Außensechskant vorgesehen sein.

Bei vorteilhaften Ausführungsbeispielen weist das eine Gehäuseteil an seiner Innenseite einen Einstellkörper der Ansteuereinrichtung auf, der mittels einer Betätigungseinrichtung zwischen einem Anschlag des einen Gehäuseteils und einem Anschlag des benachbarten Gehäuseteils verfahrbar ist, wobei der Einstellkörper auf seiner dem Ventilelement zugewandten Seite von einem Energiespeicher, vorzugsweise in Form einer Druckfeder, beaufschlagt ist, die auf das Ventilelement einwirkt.

Um für ein gegebenes Ventilgehäuse unterschiedliche Verstelloptionen zu realisieren, kann die Betätigungseinrichtung außerhalb des Ventilgehäuses angeordnet und beispielsweise derart ausgebildet sein, dass die Betätigungseinrichtung auswechselbar außerhalb des Ventilgehäuses angeordnet und beispielsweise mit einem Werkzeug verstellbar, plombierbar, auch mit einer Siegelkappe, fest eingestellt, auch auf einen Maximaldruck eingestellt, mit einem Handrad einstellbar, abschließbar oder mit einem Drehknopf mit Rasten einstellbar ist.

Hinsichtlich der Außenform des Ventilgehäuses kann die Anordnung mit Vorteil so getroffen sein, dass der freie stirnseitige Bereich des umgeformten Endes oder Endbereichs des einen Gehäuseteils, der die jeweiligen Festlegeteile ausbildet, sich an eine ring- oder flanschförmige Verbreiterung des benachbarten Gehäuseteils anschließt. Diese Gehäuseverbreiterung kann das Ende des Einschraubgewindes des Ventilgehäuses sowie die Anlagefläche für einen Dichtring bilden, der die Abdichtung bei in einen Ventilblock eingeschraubtem Ventilgehäuse bildet.

Die Erfindung betrifft weiter ein Ventilbaukastensystem mit Ventilkomponenten unterschiedlicher Bauart, die zusammengesetzt ein Ventil, insbesondere ein erfindungsgemäß ausgestaltetes Ventil, ergeben. Das erfindungsgemäße Ventilbaukastensystem zeichnet sich dadurch aus, dass eine Ventilkomponente zumindest ein Ventilelement zum Ansteuern von Fluidanschlüssen aufweist und eine weitere Ventilkomponente über eine Ansteuereinrichtung im zusammengesetzten Zustand des Ventils das Ventilelement ansteuert, und dass die beiden Ventilkomponenten mittels einer form- und/oder kraftschlüssigen Verbindung, insbesondere Crimpverbindung, miteinander verbindbar respektive im Funktionszustand miteinander verbunden sind.

Kern der Erfindung ist eine unlösbare, da gecrimpte, Universalverstellung an einem Ventil, wobei zwei Ventilkomponenten des Ventilbaukastensystems form- und/oder kraftschlüssig miteinander verbunden, insbesondere miteinander vercrimpt, sind. Als Ansteuereinrichtung dienen beispielsweise bei einem Hydroventil ein Ventilkolben sowie bei einem Drosselventil eine Ventilspindel. Vorzugsweise übergreift die eine Ventilkomponente die andere Ventilkomponente zumindest teilweise und wird entsprechend einer geeigneten Verstemmgeometrie mit dieser form- und/oder kraftschlüssig verbunden, beispielsweise durch Rollieren oder Stauchen. Die Verstemmung der Ventilkomponenten verhindert eine unbefugte Demontage oder Manipulation des Ventils. Bei der Materialverformung durch plastisches Verformen entsteht ein Form- und/oder Kraftschluss, welcher eine Übertragung des Drehmoments beim Einschrauben, Ausschrauben und Verstellen des Ventils sowie die Aufnahme axialer Druckkräfte ermöglicht. Die Verstemmung respektive das plastische Verformen des Materials kann in verschiedenen Verfahren durchgeführt werden.

Bei einer bevorzugten Ausführungsform des erfindungsgemäßen Ventilbaukastensystems ist eine der Ventilkomponenten, vorzugsweise die Ventilkomponente mit dem anzusteuernden Ventilelement, in einer Ventilaufnahme, wie einem Ventilblock, eingesetzt und die andere Ventilkomponente mit der Ansteuereinrichtung ist von außen her mit der einen Ventilkomponente vercrimpt, die hierfür mit einem vorgebbaren Überstand über die Ventilaufnahme hervorragt. Hieraus ergibt sich der Vorteil einer in einfacher Weise, mit wenigen Fertigungsschritten durchzuführenden Verbindung der beiden Ventilkomponenten mittels Vercrimpen. Gesonderte Schritte zur Lagefixierung der beiden Ventilkomponenten können entfallen.

Nachstehend ist die Erfindung anhand von in der Zeichnung dargestellten Ausführungsbeispielen im Einzelnen erläutert. Es zeigen:
- Fig. 1: einen Längsschnitt eines Stromregelventils in Cartridge-Bauweise gemäß dem Stand der Technik;
- Fig. 2: einen Längsschnitt eines Druckbegrenzungsventils in Cartridge-Bauweise gemäß dem Stand der Technik;
- Fig. 3: einen Längsschnitt eines Stromregelventils in Cartridge-Bauweise gemäß einem Ausführungsbeispiel der Erfindung;
- Fig. 4: einen Teillängsschnitt des Ausführungsbeispiels, wobei ein erstes, eine Einstelleinrichtung aufweisendes Gehäuseteil geschnitten und ein zweites, ein Ventilelement aufweisendes Gehäuseteil in Seitenansicht gezeigt sind;
- Fig. 5: einen Querschnitt des Ausführungsbeispiels entsprechend der Schnittlinie V -V von Fig. 3;
- Fig. 6: einen Längsschnitt des gesondert dargestellten, ersten Gehäuseteils;
- Fig. 7: eine Seitenansicht des gesondert dargestellten, das Ventilelement enthaltenden zweiten Gehäuseteils;
- Fig. 8: eine perspektivische Schrägansicht des zweiten Gehäuseteils, gesehen von der Seite des ersten Gehäuseteils her;
- Fig. 9: eine perspektivische Schrägansicht des ersten Gehäuseteils, gesehen von der Seite des zweiten Gehäuseteils her;
- Fig. 10: einen Längsschnitt eines Druckbegrenzungsventils in Cartridge-Bauweise gemäß dem zweiten Ausführungsbeispiel der Erfindung;
- Fig. 11: einen Teillängsschnitt des zweiten Ausführungsbeispiels, wobei das die Ansteuereinrichtung aufweisende erste Gehäuseteil geschnitten und das das Ventilelement aufweisende zweite Gehäuseteil in Seitenansicht gezeigt sind;
- Fig. 12: einen Längsschnitt eines Stromregelventils in Cartridge-Bauweise gemäß einem dritten Ausführungsbeispiel der Erfindung; und
- Fig. 13: einen Querschnitt des dritten Ausführungsbeispiels entsprechend der Schnittlinie A - A von Fig. 12.

In der Fig. 1 ist ein in der sog. Cartridge-Bauweise ausgebildetes Stromregelventil gemäß dem Stand der Technik dargestellt, dessen Ventilgehäuse 2 aus zwei Gehäuseteilen 4 und 6 besteht, deren in der Figur obenliegendes, erstes Gehäuseteil 4 eine Ansteuereinrichtung enthält, in deren zweitem Gehäuseteil 6 in der bei Stromregelventilen üblichen Weise ein Ventilelement 8 längsverfahrbar geführt ist. Das Ventilelement 8 ist als Ventilkolben ausgebildet. Für die gegenseitige Verbindung der Gehäuseteile 4 und 6 zur Bildung des Gesamtgehäuses 2 übergreift das zweite Gehäuseteil 6 mit einem endseitigen, erweiterten Gehäuseabschnitt 10 einen im Außendurchmesser verringerten, endseitigen Gehäuseabschnitt 12 des ersten Gehäuseteils 4 entlang einer Verbindungsstrecke 14, die durch eine Gewindestrecke gebildet ist, mittels deren die Gehäuseteile 4 und 6 miteinander verschraubbar sind, wobei zwischen dem oberen Ende des Gehäuseabschnitts 10 und einem Bund 16 ein Dichtring 18 die Abdichtung der Verbindungsstrecke 14 bildet. An den Gehäuseabschnitt 10 des zweiten Gehäuseteils 6 schließt sich in der Fig. 1 nach unten ein im Außendurchmesser verjüngtes Einschraubgewinde 20 an, mit dem das Ventilgehäuse 2 in einen (nicht gezeigten) Ventilblock einschraubbar ist, wobei ein Dichtring 22 am oberen Ende des Einschraubgewindes 20 die Abdichtung bildet. Die Ansteuereinrichtung im ersten Gehäuseteil 4 weist eine Gewindespindel 24 auf, mittels deren ein Einstellkörper 26 längsverfahrbar ist. An diesem stützt sich mit ihrem einen Ende eine Druckfeder 28 ab, deren anderes Ende das Ventilelement 8 belastet. Die Gewindespindel 24 weist für die Drehbetätigung zum Einstellen der Federvorspannung der Druckfeder 28 am äußeren Ende einen Innensechskant 30 sowie eine Sicherungsmutter 32 zum Festlegen der Einstellposition auf. In der bei Stromregelventilen üblichen Weise sind in dem im Inneren des (nicht gezeigten) Ventilblocks befindlichen Abschnitt des zweiten Gehäuseteils 2 sowie im Ventilelement 8 Fluiddurchlässe 34 und 36 vorgesehen, die mittels des Ventilelements 8 ansteuerbar sind.

Die Fig. 2 zeigt ebenfalls ein Ventil in Cartridge-Bauweise des Standes der Technik, dessen Ventilgehäuse 2 aus zwei Gehäuseteilen 4 und 6 besteht, wobei das das Ventilelement 8 aufweisende Gehäuseteil 6 jedoch nicht als Stromregelventil ausgebildet ist, sondern die Funktion eines Druckbegrenzungsventils besitzt. Wie bei Fig. 1 übergreift der zweite Gehäuseabschnitt 6 den ersten Gehäuseabschnitt 4 entlang einer Verbindungsstrecke 14, die zur Bildung einer Verschraubung als Gewindestrecke, mit Abdichtung durch den Dichtring 18, ausgeführt ist. Wie bei Fig. 1 enthält das erste Gehäuseteil 4 die Ansteuereinrichtung mit der Gewindespindel 24, die über den Einstellkörper 26 die Druckfeder 28 am einen Ende beaufschlagt, deren anderes Ende sich an einem Druckstück 38 abstützt, das das Ventilelement 8 belastet. Als Druckbegrenzungsventil ist das Ventilelement 8, anders als bei Fig. 1, nicht als Hohlkolben ausgebildet, sondern weist einen äußeren Druckraum 41 auf, der mit eingangsseitigen Fluiddurchlässen 36 in Verbindung ist und durch deren Fluiddruck gegen die Kraft der Druckfeder 28 das Ventilelement bewegbar ist.

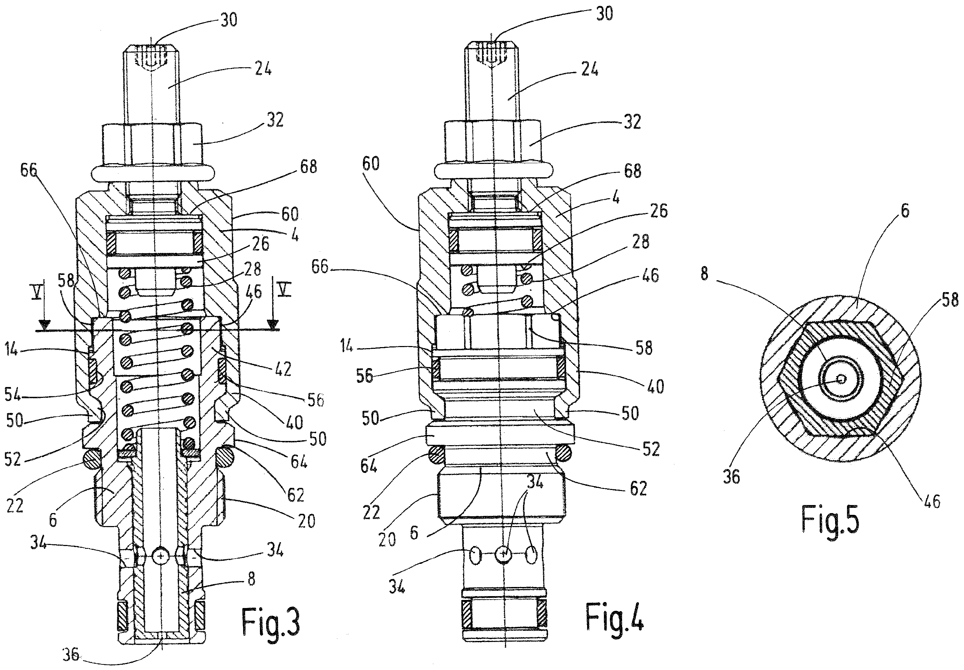

Die Fig. 3 bis 9 zeigen ein erstes Ausführungsbeispiel des erfindungsgemäßen Ventils, das, wie das in Fig. 1 gezeigte Ventil des Standes der Technik, die Ventilfunktion eines Stromregelventils besitzt. Das Ausführungsbeispiel entspricht auch insoweit dem in Fig. 1 gezeigten Ventil, als es in Form eines Cartridge-Ventils ausgebildet ist und ein aus zwei Gehäuseteilen 4 und 6 bestehendes Ventilgehäuse 2 aufweist, wobei das erste Gehäuseteil 4 eine Ansteuereinrichtung und das zweite Gehäuseteil 6 das Ventilelement 8 enthalten. Die Bauweise des zweiten Gehäuseteils 6 entspricht, was die Ausbildung des Einschraubteils mit den Fluiddurchlässen 34 und 36 und das Einschraubgewinde 20 mit dem Dichtring 22 anbelangt, der in Fig. 1 gezeigten bekannten Lösung. Dies gilt auch für die Ansteuereinrichtung im ersten Gehäuseteil 4 mit der mittels Mutter 32 sicherbaren Gewindespindel 24 mit zugehörigem Einstellkörper 26, der die Druckfeder 28 belastet. Der wesentliche Unterschied besteht in der Ausbildung der Gehäuseabschnitte von erstem Gehäuseteil 4 und zweitem Gehäuseteil 6, die sich im Bereich der Verbindungsstrecke 14 befinden. Diese Gehäuseabschnitte weisen seitens des ersten Gehäuseteils 4 ein Schalenteil 40 auf, das einen Gehäuseabschnitt 42 des zweiten Gehäuseteils 6 übergreift.

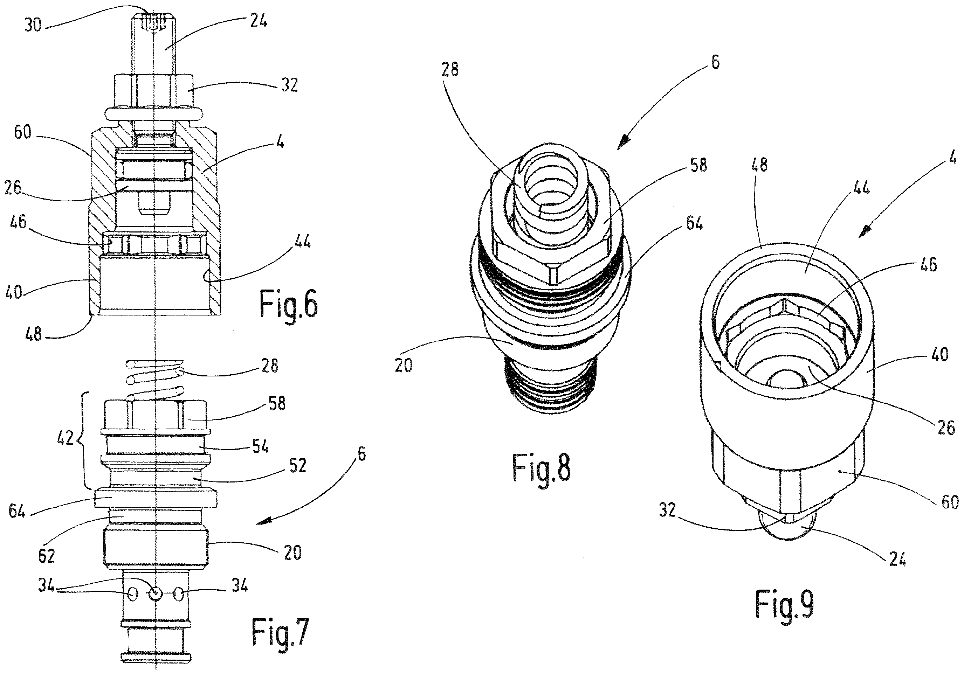

Wie am deutlichsten den Fig. 6 und 9 entnehmbar ist, weist das Schalenteil 40 des ersten Gehäuseteils 4 einen gewindefreien Innenzylinder 44 auf, der an seinem der Gewindespindel 24 zugewandten Ende in einen Innensechskant 46 übergeht, der ein Kopplungsteil verbindet. Wie die Fig. 3 und 4 zeigen, übergreift das Schalenteil 40 beim Montagezustand den außenseitig ebenfalls gewindefreien Gehäuseabschnitt 42 des zweiten Gehäuseteils 6, so dass eine gewindefreie Verbindungsstrecke 14 gebildet ist.

Die Fig. 6 und 9 zeigen das erste Gehäuseteil 4 mit noch unverformtem Schalenteil 40 vor dem Montagezustand, während die Fig. 3 und 4 den Montagezustand zeigen, bei dem durch Verstemmen des Umfangsrandes 48 Festlegeteile 50 gebildet sind, die in eine Ringnut 52 hinein verformt sind, die sich im Gehäuseabschnitt 42 des zweiten Gehäuseteils 6 befindet. Das Verstemmen zur Bildung der Festlegeteile 50 braucht nicht über die gesamte Umfangslänge des Umfangsrandes 48 durchgeführt zu werden, sondern kann zur Bildung von am Umfang verteilten Festlegeteilen 50 absatzweise erfolgen.

Wie am deutlichsten die Fig. 7 und 8 zeigen, sind am vom Schalenteil 40 übergriffenen Gehäuseabschnitt 42 außer der Ringnut 52 eine weitere Ringnut 54 für einen Dichtring 56 (Fig. 3 und 4) sowie ein sich an den Dichtring 56 anschließender Außensechskant 58 gebildet. Dieser bildet ein zum Innensechskant 46 des ersten Gehäuseteils 4 komplementäres zweites Kopplungsteil, das durch formschlüssigen Eingriff eine Kupplung für die Übertragung des Drehmoments beim Einschrauben des Ventils mittels des Einschraubgewindes 20 in den (nicht gezeigten) Ventilblock bildet. Für den Eingriff eines Einschraubwerkzeugs, wie einen Schraubenschlüssel, weist das erste Gehäuseteil 4 einen Außensechskant 60 auf. Wie am deutlichsten Fig. 7 zeigt, befindet sich am zweiten Gehäuseteil 6 zwischen der den Eingriff der Festlegeteile 50 vorgesehenen Ringnut 52 und einer weiteren Ringnut 62 für den die Abdichtung am (nicht gezeigten) Ventilblock bildenden Dichtring 22 eine flanschartige Gehäuseerweiterung 64, die die Anlagefläche für den Dichtring 22 bildet.

Wie die Fig. 3 und 4 zeigen, bildet das erste Gehäuseteil 4 am inneren Ende des Schalenteils 40 einen radial nach innen vorstehenden Absatz 66, an dem sich die freie Stirnseite des zweiten Gehäuseteils 6 in axialer Richtung abstützt. Gleichzeitig bildet bei der Anlage am Absatz 66 der Außensechskant 58 mit seinem über den Absatz 66 radial nach innen vorstehenden Teil einen Anschlag für den Einstellkörper 26 der Ansteuereinrichtung, so dass zusammen mit einem inneren Anschlag 68 im ersten Gehäuseteil 4 eine Einstell-Hubbegrenzung für die Ansteuereinrichtung gebildet ist.

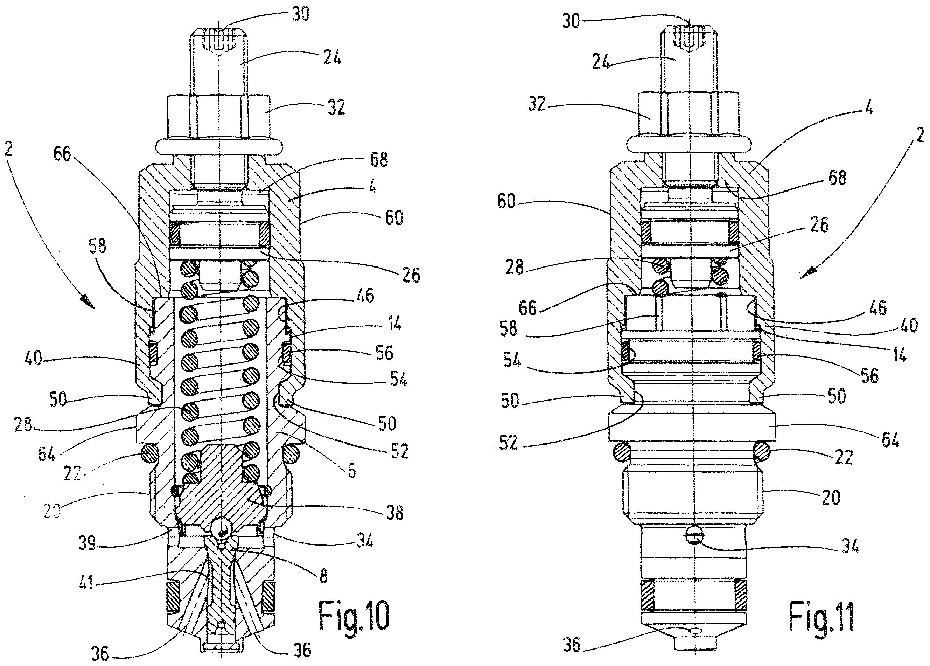

Die Fig. 10 und 11 zeigen das zweite Ausführungsbeispiel des erfindungsgemäßen Ventils. Wie beim ersten Beispiel handelt es sich um ein Ventil in Cartridge-Bauweise, dessen Ventilgehäuse 2 aus einem ersten und einem zweiten Gehäuseteil 4 und 6 besteht. Das erste Gehäuseteil 4 entspricht in voller Übereinstimmung, einschließlich der im Gehäuseteil 4 enthaltenden Ansteuereinrichtung, der Bauweise beim ersten Ausführungsbeispiel. Auch das zweite Gehäuseteil 6 entspricht, was die Ausbildung im Bereich der Verbindungsstrecke 14 anbelangt, dem ersten Ausführungsbeispiel. Wie bei diesem übergreift daher das erste Gehäuseteil 4 mit seinem Schalenteil 40 die gewindefreie Verbindungsstrecke 14 am zugeordneten Endabschnitt des zweiten Gehäuseteils 6, wobei die durch Verstemmen gebildeten Festlegeteile 50 in die Ringnut 52 am Gehäuseteil 6 eingreifen, um die kraft- und formschlüssige axiale Sicherung auszubilden. Wie beim ersten Beispiel ist die formschlüssige Drehmomentsicherung durch den Außensechskant 58 am Gehäuseteil 6 und den Innensechskant 46 am Gehäuseteil 4 gebildet.

Im Unterschied zum ersten Beispiel bildet das zweite Gehäuseteil 6 ein Druckbegrenzungsventil, bei dem das Ventilelement 8, das sich im unteren Endbereich des Gehäuseteils 6 befindet, einen umfänglichen Druckraum 41 aufweist, der über ein Druckstück 38 durch die Druckfeder 28 belastet ist. Durch den Fluiddruck im Druckraum 41, der mit den Fluiddurchlässen 36 in Verbindung ist, ist das Ventilelement 8 zusammen mit dem Druckstück 38 bewegbar, das durch seine Axialposition die durch Radialbohrungen gebildeten Fluiddurchlässe 35 ansteuert.

Die Erfindung stellt eine Art Baukastensystem zur Verfügung, bei dem mit einer Ansteuereinrichtung gleichen Typs ausgerüstete Gehäuseteile mit Gehäuseteilen unterschiedlicher Ventilfunktion kombinierbar sind. Gleichzeitig können für die Betätigung eines standardisierten Typs der Ansteuereinrichtung unterschiedliche Arten von Betätigungseinrichtungen vorgesehen sein. Außer der in den Figuren gezeigten Betätigung der Gewindespindel 24 mit einem mit deren Innensechskant 30 zusammenwirkenden Drehwerkzeug kann eine werkzeuglose Verstellung durch Drehknopf oder Handrad vorgesehen sein. Da die erfindungsgemäße, gewindelose Verbindung der Gehäuseteile 4 und 6 das ungewollte Abschrauben und dadurch eine unbefugte Demontage oder Manipulation des Ventils verhindert, kann mit besonderem Vorteil die Betätigungseinrichtung plombierbar oder mit einer Siegelkappe versehen sein, kann eine feste Einstellung, beispielsweise auf einen Maximaldruck, besitzen oder kann abschließbar ausgebildet sein, so dass größtmögliche Funktions- und Betriebssicherheit gewährleistet sind.

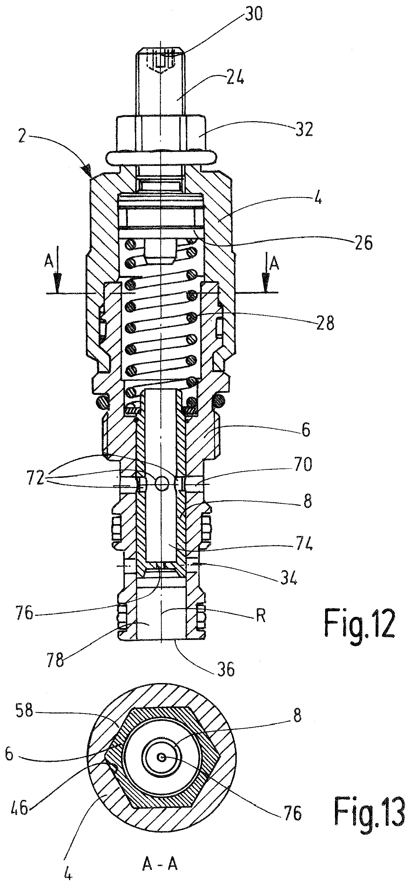

Fig. 12 zeigt einen Längsschnitt durch ein weiteres erfindungsgemäß ausgestaltetes Ventil, welches in Cartridge-Bauweise entsprechend des in Fig. 3 dargestellten Ausführungsbeispiels ausgestaltet ist und ein erstes Gehäuseteil 4 mit einer Ansteuereinrichtung 24 bis 32 und ein zweites Gehäuseteil 6 mit einem Ventilelement 8 aufweist. Im zweiten Gehäuseteil 6 ist neben den beiden Fluiddurchlässen 34 und 36 ein dritter Fluiddurchlass 70 ausgebildet, welcher vergleichbar dem zweiten Fluiddurchlass 34 radial in das zweite Gehäuseteil 6 eingebracht und vom zweiten Fluiddurchlass 34 beabstandet in Richtung des ersten Gehäuseteils 4 angeordnet ist.

Die Fluiddurchlässe 34, 36 und 70 sind über das längsverfahrbar im Ventilgehäuse 2 angeordnete Ventilelement 8 ansteuerbar. Um in der in Fig. 12 gezeigten Regelstellung den dritten Fluiddurchlass 70 mit dem ersten Fluiddurchlass 36 am axialen Ende des zweiten Gehäuseteils 6 zu verbinden, sind am Ventilelement 8 entlang eines Kreisringes angeordnete Fluiddurchlassstellen 72 ausgebildet. Über die Fluiddurchlassstellen 72 erreicht das Fluid eine Hohlausnehmung 74 im Inneren des Ventilelements 8 und weiter eine koaxial zur Symmetrieachse R ausgebildete weitere Fluiddurchlassstelle 76 am unteren Ende des Ventilelements 8. Eine Fluidverbindung vom zweiten Fluiddurchlass 34 zum ersten Fluiddurchlass 36 wird dadurch freigegeben, dass das Ventilelement 8 aus der in Fig. 12 dargestellten Position nach oben verschoben wird und somit den Fluidweg über die im zweiten Gehäuseteil 6 ausgebildete Ventilbohrung 78 freigibt.

Wie der in Fig. 13 gezeigte Schnitt entlang der senkrecht zur Symmetrieachse R angeordneten Schnittebene A - A veranschaulicht, weist das erste Gehäuseteil 4 einen Innensechskant 46 auf, der komplementär zu einem Außensechskant 58 des zweiten Gehäuseteils 6 ausgebildet ist. Hierdurch ist ein formschlüssiger Eingriff für eine Kupplung zur Übertragung des Drehmoments beim Einschrauben des Ventils ermöglicht. Im Innenraum des ersten Gehäuseteils 6 ist das Ventilelement 8 mit der weiteren Fluiddurchlassstelle 76 am axialen unteren Ende angeordnet.

Das erste Gehäuseteil 4 mit der Ansteuereinrichtung 24 bildet eine erste Ventilkomponente und das zweite Gehäuseteil 6 mit dem Ventilelement 8 eine zweite Ventilkomponente. Die beiden Ventilkomponenten bilden ein erfindungsgemäß ausgebildetes Ventilbaukastensystem, wobei hier unterschiedlich ausgestaltete Ventilkomponenten erfindungsgemäß über eine form- und/oder kraftschlüssige Verbindung, insbesondere eine Crimpverbindung, miteinander verbunden, respektive miteinander verbindbar, sind. Insbesondere ist es vorstellbar, unterschiedlich ausgestaltete Ventilkomponenten mit gleichartigen Verschlussteilen zu bevorraten, welche anforderungsgerecht zu einem geeigneten Ventil zusammengesetzt und miteinander verbunden werden.

## Patentansprüche

1. Ventil mit einem mehrteiligen, insbesondere zweiteiligen, Ventilgehäuse (2), das zum Ansteuern von Fluiddurchlässen (34, 36, 70) ein Ventilelement (8) aufweist, dessen Betätigungskraft und/oder -weg mittels einer Ansteuereinrichtung (24) vorgebbar ist, wobei ein Gehäuseteil (4) ein benachbartes Gehäuseteil (6) entlang einer vorgebbaren Verbindungsstrecke (14) übergreift, **dadurch gekennzeichnet, dass** entlang der Verbindungsstrecke (14) ein Gehäuseteil (4) unter Veränderung seines Querschnitts zumindest ein Festlegeteil (50) ausbildet, das in eine zuordenbare Ausnehmung (52) im benachbarten Gehäuseteil (6) eingreift.

2. Ventil nach Anspruch 1, **dadurch gekennzeichnet, dass** das eine Gehäuseteil (4), das das benachbarte Gehäuseteil (6) übergreift, an seinem freien Ende oder Endbereich (48) durch Umformen unter Verringerung seines Querschnitts nach innen vorstehend das jeweilige Festlegeteil (50) ausbildet, das in die zuordenbare Ausnehmung (52) im benachbarten Gehäuseteil (6) derart eingreift, dass vorzugsweise eine form- und/oder kraftschlüssige Verbindung zwischen den Gehäuseteilen (4, 6) an dieser Stelle erreicht ist.

3. Ventil nach Anspruch 1 oder 2, **dadurch gekennzeichnet, dass** eines (4) der benachbarten Gehäuseteile (4, 6) ein Kopplungsteil (46) aufweist, das mit einem komplementär ausgebildeten weiteren Kopplungsteil (58) des anderen Gehäuseteils (6) derart zusammenwirkt, dass eine formschlüssige Verbindung zwischen diesen Gehäuseteilen (4, 6) in deren festgelegtem Zustand aneinander erreicht ist.

4. Ventil nach einem der vorstehenden Ansprüche, **dadurch gekennzeichnet, dass** entlang der Verbindungsstrecke (14) zwischen der formschlüssigen sowie der form- und kraftschlüssigen Verbindung zwischen den beiden Gehäuseteilen (4, 6) eine Dichteinrichtung, vorzugsweise in Form mindestens eines O-Dichtringes (56), angeordnet ist.

5. Ventil nach einem der vorstehenden Ansprüche, **dadurch gekennzeichnet, dass** das eine Gehäuseteil (4) zumindest teilweise die Ansteuereinrichtung (24) aufnimmt und das andere Gehäuseteil (6) das in ihm längs verfahrbar angeordnete Ventilelement (8).

6. Ventil nach einem der vorstehenden Ansprüche, **dadurch gekennzeichnet, dass** das andere Gehäuseteil (6) mit dem Ventilelement (8) als Kopplungsteil an seiner freien Stirnseite einen Mehrkant (58), eine Keilwelle, eine Polygonwelle, eine Kerbverzahnung oder einen sonstigen, einen Formschluss ermöglichenden Profilquerschnitt aufweist, der in eine komplementär ausgebildete Ausnehmung (46) des einen Gehäuseteils (4) als dem weiteren Kopplungsteil eingreift, und dass das eine Gehäuseteil (4) einen Absatz (66) aufweist, an dem sich die freie Stirnseite des anderen Gehäuseteils (6) in axialer Richtung abstützt.

7. Ventil nach einem der vorstehenden Ansprüche, **dadurch gekennzeichnet, dass** das Ventilgehäuse (2) außenumfangsseitig eine Einschraubstrecke (20) aufweist, zum Einschrauben in Drittbauteile, wie Ventilblöcke, und dass eine Angriffsmöglichkeit (60) für ein Werkzeug, wie einen Schraubenschlüssel, an dem einen Gehäuseteil (4) außenumfangsseitig angeordnet ist.

8. Ventil nach einem der vorstehenden Ansprüche, **dadurch gekennzeichnet, dass** das eine Gehäuseteil (4) an seiner Innenseite einen Einstellkörper (26) der Ansteuereinrichtung (24) aufweist, der mittels einer Betätigungseinrichtung (30) zwischen einem Anschlag (68) des einen Gehäuseteil (4) und einem Anschlag (46) des benachbarten Gehäuseteils (6) verfahrbar ist, und dass der Einstellkörper (26) auf seiner dem Ventilelement (8) zugewandten Seite von einem Energiespeicher, vorzugsweise in Form einer Druckfeder (28), beaufschlagt ist, der auf das Ventilelement (8) einwirkt.

9. Ventil nach einem der vorstehenden Ansprüche, **dadurch gekennzeichnet, dass** die Betätigungseinrichtung auswechselbar außerhalb des Ventilgehäuses (2) angeordnet und beispielsweise
- mit einem Werkzeug verstellbar,
- plombierbar, auch mit einer Siegelkappe,
- fest eingestellt, auch auf einen Maximaldruck eingestellt,
- mit einem Handrad einstellbar,
- abschließbar, oder
- mit einem Drehknopf mit Rasten einstellbar
ist.

10. Ventil nach einem der vorstehenden Ansprüche, **dadurch gekennzeichnet, dass** der freie stirnseitige Bereich des umgeformten Endes oder Endbereiches (48) des einen Gehäuseteiles (4) sich an eine ring- oder flanschförmige Verbreiterung (64) des benachbarten Gehäuseteils (6) anschließt.

11. Ventilbaukastensystem mit Ventilkomponenten unterschiedlicher Bauart, die zusammengesetzt ein Ventil, insbesondere nach einem der vorstehenden Ansprüche ergeben, **dadurch gekennzeichnet, dass** eine Ventilkomponente zumindest ein Ventilelement (8) zum Ansteuern von Fluidanschlüssen (34, 36, 70) aufweist und eine weitere Ventilkomponente über eine Ansteuereinrichtung (24) im zusammengesetzten Zustand des Ventils das Ventilelement (8) ansteuert, und dass die beiden Ventilkomponenten mittels einer form- und/oder kraftschlüssigen Verbindung, insbesondere Crimpverbindung, miteinander verbindbar respektive im Funktionszustand miteinander verbunden sind.

12. Ventilbaukastensystem, **dadurch gekennzeichnet, dass** eine der Ventilkomponenten, vorzugsweise die Ventilkomponente mit dem anzusteuernden Ventilelement (8), in einer Ventilaufnahme, wie einem Ventilblock, eingesetzt ist und die andere Ventilkomponente mit der Ansteuereinrichtung (24) von außen her mit der einen Ventilkomponente vercrimpt ist, die hierfür mit einem vorgebbaren Überstand über die Ventilaufnahme hervorragt.
